# EUROPEAN PATENT SPECIFICATION

(11) **EP 1 387 229 B1**
(45) Date of publication and mention of the grant of the patent: **06.09.2006**
(21) Application number: 03077359.2
(22) Date of filing: 28.07.2003
(51) Int. Cl.: G05B 9/02, H02B 1/50

(54) **Multifunctional retractable supply system**
Multifunktionales versenkbares Versorgungssystem
Système d'alimentation multifonctionel et rétractable

(30) Priority: 30.07.2002 IT MI20021689
(43) Date of publication of application: 04.02.2004
(73) Proprietor: Savi, Valter, 29012 Caorso (PC) (IT); Groppi, Gian Paolo, 29100 Piacenza (IT); Capra, Antonio, 29019 San Giorgio Piacentino (PC) (IT)
(72) Inventor: Savi, Valter, 29012 Caorso (PC) (IT); Groppi, Gian Paolo, 29100 Piacenza (IT); Capra, Antonio, 29019 San Giorgio Piacentino (PC) (IT)
(74) Representative: Mittler, Enrico

(56) References cited:
- DE-U- 29 815 178
- FR-A- 2 722 221
- US-A- 5 888 078

## Description

The present invention refers to a multifunctional retractable supply system.

Electrical, electronic, gas and air equipments that are positioned inside or outside buildings, on public or private roads, and supplying primary services are generally known.

These equipments show various inconveniences because of their position and characteristics In fact these equipments have extension cords, pipings, mobile surface-laid cables that are a hindrance and danger for the operator and for the community, they have no safety system during use, they are easily accessible to unauthorised people and have an ungainly appearance.

US 5,888,078 discloses a retractable service unit for the supply of energy of fluids. The service unit includes a protective box preferably adapted to be sunk in the ground, a casing, slides fixed to the casing, lifting means comprising two vertical slideways secured to two parallel walls of the box with the slides being movably located in the slideways, jacks extending within the slideways. The jacks may be arranged end to end or may be located in separate slides in each slideway in a side by side, staggered manner.

FR 2722221 discloses an utility terminal including a lid to an underground chamber which is hinged about an horizontal axis such that when lowered it is flush with the ground The lid is connected by articulated arms to beams constrained to move vertically by rollers running in rails. A platform is supported by the beams so that it remains horizontal while free to move from a retracted position in the chamber to a ground level position as the lid is opened. The horizontal platform is suitable to carry utility terminals of all types.

DE 29815178 discloses a retractable service unit for the supply of energy of fluids.

In view of the state of the technique, object of the present invention is to provide a multifunctional supply system that overcomes the above-mentioned inconveniences and is capable of supplying primary and supplementary services with one single structure.

In accordance with the present invention, this object is achieved by means of a multifunctional supply system as defined in claim 1. multifunctional device capable of delivering at least electricity, water and gas, movement means for moving said device from a rest position inside a recess made in a road or in a footpath to a work position on the surface of the road or footpath and vice versa and control means associated to said.

The characteristics and advantages of the present invention will appear evident from the following detailed description of an embodiment thereof, illustrated as non-limiting example in the enclosed drawings, in which:
Figure 1 is a schematic sectional view of the multifunctional supply system according to the present invention with a multifunctional device in work position;
Figure 2 is a schematic rear view of the system in Figure 1 with the multifunctional device in rest position;
Figure 3 is a schematic view of a circuit relating to the command panel of the system of Figure 1;
Figure 4 is a front view of the multifunctional device in rest condition;
Figure 5 is a front view of the multifunctional device in work conditions;
Figure 6 is a view in perspective of the multifunctional device included in the supply system according to the present invention;
Figure 7 is a front view of the electric control panel of the supply system in Figure 1.

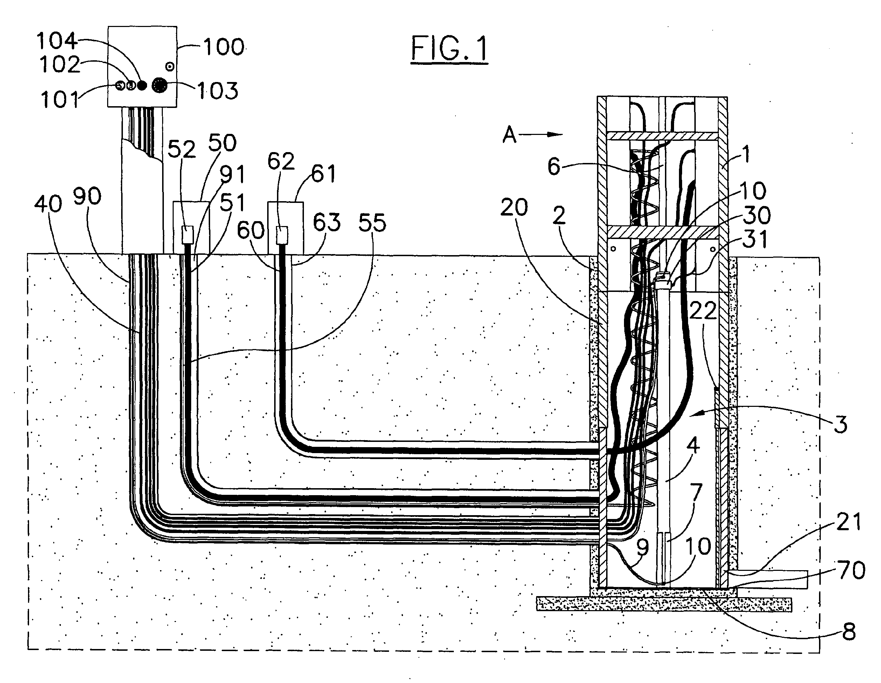

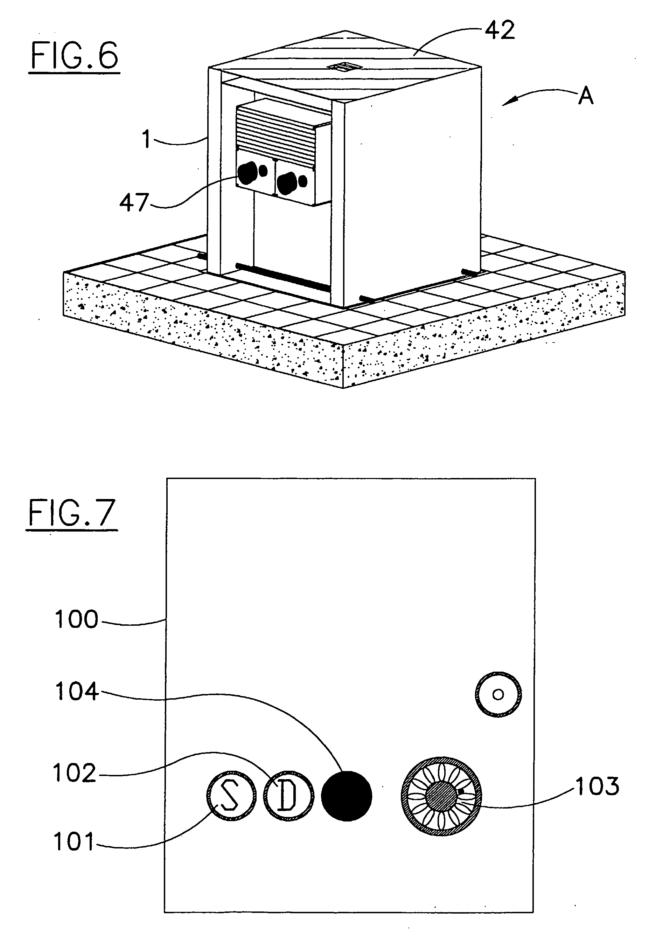

Figures 1-7 show a multifunctional supply system according to the present invention. Said system comprises a multifunctional device 1, which can be seen better in Figure 6, that is, a device fitted with the components needed to deliver electricity, to be connected to a telephone system, to be connected to a data transmission system, to be connected to a gas delivery system, to be connected to an air emission system and to be connected to other types of systems. Said multifunctional device 1 is made up of a parallelepiped structure, preferably made of metal material, provided with various compartments containing said components.

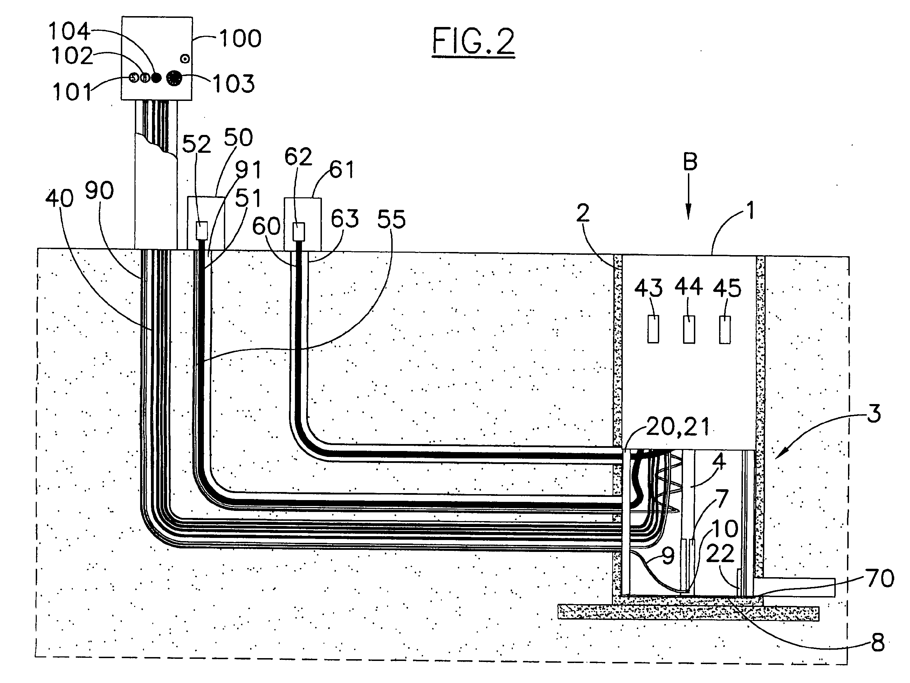

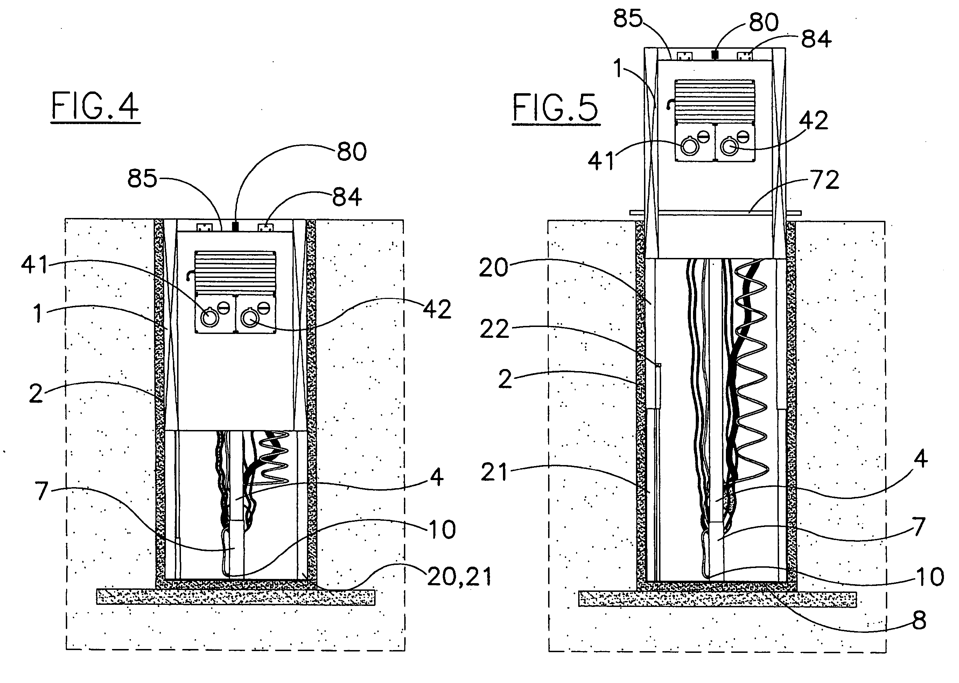

The system according to the invention uses means suited to move the device 1 from a rest position B (visible in Figures 2 and 4) to a work position A (visible in Figures 1 and 5). The device 1, in the rest position B, is positioned in a recess 2, preferably made of concrete or reinforced concrete, made on the bed of any road or footpath. In the rest position B the device 1 is completely inside the recess 2 so that its top is lower than the surface of the road or the footpath; the same recess 2 can be closed by a steel sheet or cast iron element of the type that can support the passage of heavy vehicles. The use of a tube 70 can also be provided for draining water that could be present in the recess 2. The device 1 can come out of the recess 1 only when it is needed.

Said movement means comprise as an example an air pneumatic system 3 equipped with a cylinder 4 in which a piston slides integral with a stem 6, which in turn is integral with the device 1. The lower part of the cylinder 4 is positioned inside a metal casing 7 whose lower extremity is anchored to the bottom 8 of the recess 2. The cylinder 4 is preferably a cylinder of anodised aluminium alloy, with a liner in extruded tube of anodised aluminium alloy, the piston is rubber and the stem 6 is stainless steel. The same cylinder 4 is the grip type that is should it break it stays under pressure and does not reenter the recess 2. In alternative to the grip cylinder a normal cylinder can be used complete with suitable seal valve that intervenes should the cylinder break, preventing it from re-entering the recess 2.

The supply of air to the cylinder 4 is carried out by means of flexible plastic tubes 9 of polyurethane positioned in a PVC tube 90 sunk into the surface and coupled to an external supply point.

The speed of movement of the device 1 is regulated by means of two valves 10 suited to regulating the pressure of the air and anchored to a metal casing 7 and to the other upper extremity of the cylinder 4. Said valves 10 are connected by means of tubes 9 to a pressure regulator and to a manometer inserted in a command panel 100 which can be seen better in Figure 7 and is positioned on the wall above the bed of the footpath or the road.

Said command panel 100 comprises pushbuttons 101 and 102 suited to commanding respectively the outward movement of the device 1 from the recess 2 and the re-entering of the device 1 in the recess 2. In addition, said command panel comprises an acoustic signaller 103 and an optic signaller 104 that are activated by a timer TM with the device 1 in movement.

An electric supply line 40 leads off from the command panel 100 coupled to the external electricity network and positioned partially in the PVC tube 90 and partially fastened to the relative compartment of the device 1 from which it delivers electricity by means of the industrial type of plugs 41, 42.

A water supply line 51 leads off from the closest normal water supply point 50 and reaches the device 1. Preferably said water supply line 51 comprises polyethylene tubes sunk in the surface and positioned inside a PVC tube 91 and connected by means of metal joints to flexible stainless steel tubes fastened to the relative compartment of the device 1 and connected to a delivery source 43. The delivery of the water is controlled from the command panel 100 by means of action on a solenoid valve 52 placed upstream from the water supply line 51.

An air supply line 55 leads off from the closest supply point, for example the same supply point used for the pneumatic operation of the system, and by means of a flexible tube positioned inside the PVC tube 91 reaches a delivering device 45 positioned in the relative compartment of the device 1.

A gas supply line 60 leads off from the closest normal supply point of gas 61 and reaches the device 1. Preferably said gas supply line comprises polyethylene tubes sunk in the surface and positioned inside a PVC tube 63 and connected by means of metal fittings to flexible stainless steel tubes fastened to the relative compartment of the device 1 and connected to a delivery source 44. The delivery of the gas is controlled from the command panel 100 by means of action on a solenoid valve 62 placed upstream from the gas supply line 60.

With the device 1 in rest position B the supply lines of electricity 40, gas 60 and water 52 are not active.

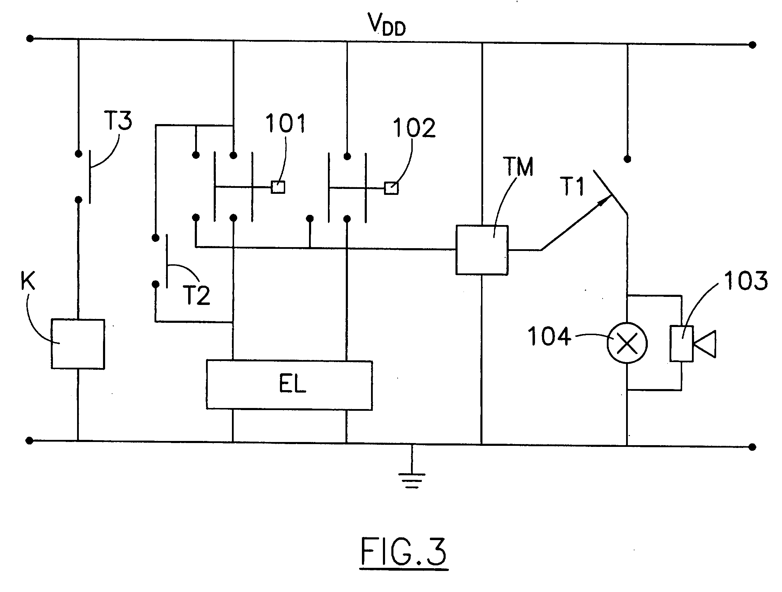

The activation of the pushbutton 101 causes the activation of a solenoid valve EL and the timer TM placed inside the command panel 100; said activation comes about by means of closing a contact of the pushbutton 101 with impulse command in series with the solenoid valve EL so as to enable its supply with a voltage VDD as can be seen in Figure 3. Said solenoid valve EL acts on the pneumatic system 3 enabling air to pass through the tubes 9 inside the cylinder 4; the flow of air is regulated by the pressure regulator and by the regulator valves 10 and the manometer measures this regulation. The same regulator valves 10 are calibrated at such a pressure as to enable the device 1 to move upward only if there is no object on the closing element that could hinder the rising of the device 1. The timer TM activates the optic signaller 104 and the acoustic signaller 103 by means of the key T1 closing. The device 1 is raised by the action of the stem 6 connected to the piston; a metal structure 20 integral with the device 1 can slide on guides 21 positioned inside the recess 2. The device 1 is totally raised when the cylinder is at its maximum extension; further safety devices are metal retainers 22 suited to blocking the extraction of the device 1. When the work position A of the device 1 has been reached, a limit switch 30 integral with the upper extremity of the cylinder 4 is excited by means of a flexible metal band 31 integral with the device 1. The limit switch 30 by means of an electric connection with the command panel 100 with an electric line positioned inside the PVC tube 90, enables the delivery of electricity, gas and water activating the supply lines 40 and 51; for example the water supply line 51, the electricity supply line 40 and the gas supply line 60 can be activated by means of the closing action of a contact T3 that enables the counter K capable of connecting the line 40 to the external electricity network and of enabling the solenoid valves 52 and 62, as can be seen in Figure 3.

Activation of the pushbutton 102 causes the activation of the solenoid valve EL and the timer TM by means of closing with impulse command of a contact of the pushbutton 102 positioned in series to the solenoid valve EL so as to enable its supply with voltage VDD, as can be seen in Figure 3. Said solenoid valve EL acts on the pneumatic system 3 permitting the outflow of air that comes from the cylinder 4 through the tube 9 outwards; the flow of air is regulated by the pressure regulator and by the regulator valves 10 and the manometer measures this regulation. The limit switch 30 is de-energized and disables the delivery of electricity, water and gas opening the contact T3. The timer TM activates the optic signaller 104 and the acoustic signaller 103. The device 1 is lowered by action of the stem 6 connected to the piston; the metal structure 20 integral with the device 1 slides on guides 21 positioned inside the recess 2.

Anti-squashing bars 85 can be connected to the sides of the device 1 by means of special hinges 84 near the top that act during the descent of the device 1 to prevent it from closing on people or objects. Said bars act on limit switches 80 that act on the solenoid valve EL by means of closing the contact T2 for the device 1 to rise again.

Protection devices against over-current and indirect contacts of the electricity supply line 40 need to be inserted in the command panel 100.

As a further safety element the use of mobile metal tubular structures 72 can be provided in special holes made in the device 1 so as to prevent the sudden return of the device 1 to position B in the recess 2 because of the breakage of the cylinder 4.

## Claims

1. Multifunctional supply system comprising a multifunctional device (1) capable of delivering at least electricity, water and gas, movement means (3) for moving said multifunctional device (1) from a rest position (B) inside a recess (2) made in a road or in a footpath to a work position (A) on the surface of the road or footpath and vice versa and control means (10) associated to said movement means (3) to cause movement to said rest (B) and work (A) positions, said movement means (3) comprising an air pneumatic system comprising a cylinder (4) and a piston integral with a stem (6) coupled to said multifunctional device (1), **characterised by** comprising means for transporting air (9) inside said cylinder (4) coupled to an external supply point and a command panel (100) comprising means (101, 102) for activating a solenoid valve (EL) upstream of said air transport means (9) so as to command the flow and outflow of air from the cylinder (4), said multifunctional device comprising anti-squashing bars (85) positioned on the top of said multifunctional device (1) which, should it come against obstacles when said multifunctional device (1) transits from the work position (A) to the rest position (B), act on said solenoid valve (EL) to make said multifunctional device (1) return to its work position.

2. System according to claim 1, **characterised in that** said control means (10) comprise air pressure regulator valves in said cylinder (4).

3. System according to claim 1, **characterised in that** said command panel (100) comprises means (TM, T1) suited to activating acoustic signallers (103) and optic signallers (104) with the activation of said solenoid valve (EL).

4. System according to claim 1, **characterised in that** said cylinder (4) is the grip type.

5. System according to claim 1, **characterised in that** said cylinder (4) comprises a seal type valve.

6. System according to claim 1, **characterised in that** it comprises movable metal tubes (72) inserted in said multifunctional device (1) in the work position (A) to prevent return to the rest position (B) because of the breakage of said cylinder (4).

7. System according to claim 1, **characterised in that** it comprises supply lines (40, 51, 60) of said electricity, water and gas terminating on one side with delivering devices (41-44) positioned in special compartments of said multifunctional device (1) and on the other with means for connecting (K, 52, 62) with the respective external networks of electricity, water and gas.

8. System according to claim 7, **characterised in that** said supply lines (40, 51, 60) of said electricity, water and gas are inserted in PVC tubes (90, 91, 63) sunk in the surface of the road or footpath.

9. System according to claim 7, **characterised in that** it comprises further control means (30) capable of activating said delivery of at least electricity, water and gas when said multifunctional device (1) reaches said work position (A) and capable of de-activating said delivery of at least electricity, water and gas when the multifunctional device (1) is no longer in said work position (A).

10. System according to claim 9, **characterised in that** said further control means (30) comprise limit switches of the piston in the cylinder (4) capable of enabling and disabling said connection means (K, 52, 62) of the supply lines of electricity (40), water (51) and gas (60) with the respective external networks of electricity, water and gas, said limit switches being anchored to the cylinder.

11. System according to claim 1, **characterised in that** said device (1) is also capable of delivering compressed air by means of a supply line (55) terminating in said multifunctional device (1) with a delivery device (45) and comprises elements for connection to a telephone system and a data transmission system.

## Patentansprüche

1. Multifunktionales Versorgungssystem, das Folgendes umfasst: eine multifunktionale Vorrichtung (1), die mindestens Elektrizität, Wasser und Gas liefern kann, Bewegungsmittel (3) zum Bewegen der multifunktionalen Vorrichtung (1) aus einer Ruhestellung (B) innerhalb einer in einer Straße oder in einem Fußweg ausgebildeten Ausnehmung (2) in eine Arbeitsstellung (A) auf der Oberfläche der Straße oder des Fußwegs und umgekehrt und Steuermittel (10), die den Bewegungsmitteln (3) zugeordnet sind, um eine Bewegung in die Ruhe- (B) und Arbeits- (A)Stellung zu bewirken, wobei die Bewegungsmittel (3) ein Druckluftsystem mit einem Zylinder (4) und einem mit einem mit der multifunktionalen Vorrichtung (1) verbundenen Schaft (6) integralen Kolben umfassen, **dadurch gekennzeichnet, dass** es ein Mittel zur Beförderung von Luft (9) innerhalb des Zylinders (4), das mit einer externen Versorgungsstelle verbunden ist, und eine Steuertafel (100) umfasst, die Mittel (101, 102) zur Aktivierung eines Magnetventils (EL) stromaufwärts des Luftbeförderungsmittels (9) umfasst, um die Strömung und die Ausströmung von Luft aus dem Zylinder (4) zu steuern, wobei die multifunktionale Vorrichtung Antiquetschstäbe (85) umfasst, die oben auf der multifunktionalen Vorrichtung (1) angeordnet sind und bei Stoßen der Vorrichtung (1) auf Hindernisse bei ihrem Übergang aus der Arbeitsstellung (A) in die Ruhestellung (B) dahingehend auf das Magnetventil (EL) einwirkt, die multifunktionale Vorrichtung (1) in ihre Arbeitsstellung zurückzuführen.

2. System nach Anspruch 1, **dadurch gekennzeichnet, dass** die Steuermittel (10) Luftdruckregelventile in dem Zylinder (4) umfassen.

3. System nach Anspruch 1, **dadurch gekennzeichnet, dass** die Steuertafel (100) Mittel (TM, T1) umfasst, die sich zur Aktivierung von akustischen Meldern (103) und optischen Meldern (104) mit der Aktivierung des Magnetventils (EL) eignen.

4. System nach Anspruch 1, **dadurch gekennzeichnet, dass** der Zylinder (4) der Greifart ist.

5. System nach Anspruch 1, **dadurch gekennzeichnet, dass** der Zylinder (4) ein Verschlussventil umfasst.

6. System nach Anspruch 1, **dadurch gekennzeichnet, dass** es bewegliche Metallrohre (72) umfasst, die in der multifunktionalen Vorrichtung (1) in der Arbeitsstellung (A) eingesetzt sind, um eine Rückkehr in die Ruhestellung (B) aufgrund von Brechen des Zylinders (4) zu vermeiden.

7. System nach Anspruch 1, **dadurch gekennzeichnet, dass** es Versorgungsleitungen (40, 51, 60) für Elektrizität, Wasser und Gas umfasst, die an einer Seite mit Zufuhrvorrichtungen (41 - 44) abschließen, welche in Spezialkammern der multifunktionalen Vorrichtung (1) angeordnet sind, und an der anderen mit Mitteln zur Verbindung (K, 52, 62) mit dem jeweiligen externen Elektrizitäts-, Wasser- und Gasnetz.

8. System nach Anspruch 7, **dadurch gekennzeichnet, dass** die Versorgungsleitungen (40, 51, 60) für Elektrizität, Wasser und Gas in PVC-Rohren (90, 91, 63) eingesetzt sind, die in der Straßen- oder Fußwegoberfläche eingelassen sind.

9. System nach Anspruch 7, **dadurch gekennzeichnet, dass** es weitere Steuermittel (30) umfasst, die die Zufuhr von mindestens Elektrizität, Wasser und Gas aktivieren können, wenn die multifunktionale Vorrichtung (1) die Arbeitsstellung (A) erreicht, und die Zufuhr von mindestens Elektrizität, Wasser und Gas deaktivieren können, wenn die multifunktionale Vorrichtung (1) nicht länger in Arbeitsstellung (A) ist.

10. System nach Anspruch 9, **dadurch gekennzeichnet, dass** die weiteren Steuermittel (30) Grenzschalter des Kolbens im Zylinder (4) umfassen, die die Verbindungsmittel (K, 52, 62) der Versorgungsleitungen für Elektrizität (40), Wasser (51) und Gas (60) mit dem jeweiligen externen Elektrizitäts-, Wasser- und Gasnetz aktivieren und sperren können, wobei die Grenzschalter mit dem Zylinder verankert sind.

11. System nach Anspruch 1, **dadurch gekennzeichnet, dass** die Vorrichtung (1) des Weiteren Druckluft mittels einer Versorgungsleitung (55) zuführen kann, die in der multifunktionalen Vorrichtung (1) mit einer Zufuhrvorrichtung (45) abschließt, und Elemente zur Verbindung mit einem Telefonsystem und einem Datenübertragungssystem umfasst.

## Revendications

1. Système d'alimentation multifonctionnel, comprenant un dispositif multifonctionnel (1) qui est en mesure de délivrer au moins de l'électricité, de l'eau et du gaz, un moyen de déplacement (3) servant à déplacer ledit dispositif multifonctionnel (1) d'une positon de repos (B), se trouvant à l'intérieur d'un évidement (2) fait dans une route ou dans un sentier, à une position de travail (A), se trouvant à la surface de la route ou du sentier, et inversement, et un moyen de commande (10) associé audit moyen de déplacement (3) afin de provoquer le déplacement auxdites positions de repos (B) et de travail (A), ledit moyen de déplacement (3) comprenant un système pneumatique à air comprenant un cylindre (4) et un piston solidaire d'une tige (6) couplé audit dispositif multifonctionnel (1),
**caractérisé en ce qu'**il comprend un moyen permettant de transporter de l'air (9) à l'intérieur dudit cylindre (4) couplé à un point d'alimentation extérieur et un panneau de commande (100) comprenant un moyen (101, 102) servant à activer une soupape à solénoïde (EL) située en amont dudit moyen de transport d'air (9) afin de commander la circulation et la sortie de l'air hors dudit cylindre (4), ledit dispositif multifonctionnel comprenant des barres anti-écrasement (85) placées sur le dessus dudit dispositif multifonctionnel (1), qui, s'il devait venir porter contre des obstacles lors du passage du dispositif multifonctionnel (1) de la position de travail (A) à la position de repos (B), agiraient sur la soupape à solénoïde (EL) pour amener ledit dispositif multifonctionnel (1) à revenir à sa position de travail.

2. Système selon la revendication 1, **caractérisé en ce que** ledit moyen de commande (10) comprend des soupapes de régulation de pression d'air placées dans ledit cylindre (4).

3. Système selon la revendication 1, **caractérisé en ce que** ledit panneau de commande (100) comprend des moyens (TM, T1) conçus pour activer des moyens de signalisation acoustique (103) et des moyens de signalisation optique (104) en liaison avec l'activation de ladite soupape à solénoïde (EL).

4. Système selon la revendication 1, **caractérisé en ce que** ledit cylindre est du type à blocage.

5. Système selon la revendication 1, **caractérisé en ce que** ledit cylindre (4) comprend une vanne du type étanchéité.

6. Système selon la revendication 1, **caractérisé en ce qu'**il comprend des tubes métalliques mobiles (72) insérés dans ledit dispositif multifonctionnel (1) placé en position de travail (A) afin d'empêcher le retour à la position de repos (B) en raison d'une rupture dudit cylindre (4).

7. Système selon la revendication 1, **caractérisé en ce qu'**il comprend des lignes d'alimentation (40, 51, 60) pour l'électricité, l'eau et le gaz, se terminant d'un côté par des dispositifs de délivrance (41 à 44) placés dans des compartiments spéciaux dudit dispositif multifonctionnel (1) et, de l'autre côté, par des moyens servant à assurer la connexion (K, 52, 62) avec les réseaux externes respectifs d'électricité, d'eau et de gaz.

8. Système selon la revendication 7, **caractérisé en ce que** lesdites lignes d'alimentation (40, 51, 60) en électricité, eau et gaz sont insérées dans des tubes en PVC (90, 91, 63) enterrés sous la surface de la route ou du sentier.

9. Système selon la revendication 7, **caractérisé en ce qu'**il comprend en outre un moyen de commande (30) qui est en mesure d'activer ladite délivrance pour au moins l'électricité, l'eau et le gaz lorsque ledit dispositif multifonctionnel (1) atteint ladite position de travail (A) et est en mesure de désactiver ladite délivrance pour au moins l'électricité, l'eau et le gaz lorsque le dispositif multifonctionnel (1) n'est plus dans ladite position de travail (A).

10. Système selon la revendication 9, **caractérisé en ce que** ledit moyen de commande supplémentaire (30) comprend des interrupteurs de fin de course appartenant au piston se trouvant dans le cylindre (4), qui sont en mesure de valider et d'invalider lesdits moyens de connexion (K, 52, 62) des lignes d'alimentation en électricité (40), en eau (51) et en gaz (60) avec les réseaux extérieurs respectifs d'électricité, d'eau et de gaz, lesdits interrupteurs de fin de course étant amarrés au cylindre.

11. Système selon la revendication 1, **caractérisé en ce que** ledit dispositif (1) est également en mesure de délivrer de l'air comprimé au moyen d'une ligne d'alimentation (55) se terminant dans ledit dispositif multifonctionnel (1) par un dispositif de délivrance (45) et comprend des éléments permettant la connexion d'un système téléphonique et d'un système de transmission de données.
